**Europäisches Patentamt**

**European Patent Office**

**Office européen des brevets**

(19)

(11) Veröffentlichungsnummer : **0 328 595 B1**

(12) # EUROPÄISCHE PATENTSCHRIFT

(45) Veröffentlichungstag der Patentschrift :
15.05.91 Patentblatt 91/20

(51) Int. Cl.⁵ : **F16C 13/00, D21G 1/02**

(21) Anmeldenummer : **88907132.0**

(22) Anmeldetag : **11.08.88**

(86) Internationale Anmeldenummer :
**PCT/CH88/00136**

(87) Internationale Veröffentlichungsnummer :
**WO 89/02038 09.03.89 Gazette 89/06**

(54) **DRUCKWALZE.**

(30) Priorität : **31.08.87 CH 3337/87**

(43) Veröffentlichungstag der Anmeldung :
**23.08.89 Patentblatt 89/34**

(45) Bekanntmachung des Hinweises auf die
Patenterteilung :
**15.05.91 Patentblatt 91/20**

(84) Benannte Vertragsstaaten :
**AT DE GB IT NL SE**

(56) Entgegenhaltungen :
**FR-A- 2 205 134**
**GB-A- 2 029 932**
**GB-A- 2 143 302**
**US-A- 3 494 675**
**US-A- 4 305 191**

(73) Patentinhaber : **SULZER-ESCHER WYSS AG**
**Hardstrasse 319**
**CH-8023 Zürich (CH)**

(72) Erfinder : **BIONDETTI, Mario**
**Via Maraschin 59**
**I-36015 Schio (IT)**
Erfinder : **STOTZ, Wolf-Gunter**
**Federburgstrasse 50**
**W-7980 Ravensburg (DE)**

(74) Vertreter : **Paschedag, Hansjoachim**
**c/o Sulzer - Escher Wyss AG Patentabteilung**
**Postfach**
**CH-8023 Zürich (CH)**

EP 0 328 595 B1

## Beschreibung

### Technisches Gebiet

Die Erfindung betrifft eine Druckwalze mit einem nicht-rotierbaren axialen Träger und einem um den Träger rotierbaren, gegen den Träger abgestützten, gegenüber dem Träger über seine gesamte Breite in einer Stützrichtung beweglichen Walzenmantel, wobei wenigstens ein den Walzenmantel abstützendes und axial fixierendes, hydrostatisches Stützelement mit sphärischer Lagerfläche, und am Walzenmantel eine entsprechende sphärische Lauffläche mit gleicher Krümmung vorgesehen ist.

Solche z.B. aus GB-A-2 143 302, insbes. Fig. 12 vorbekannten sogenannten Durchbiegungseinstellwalzen dienen zur Press- oder Druckbehandlung von Warenbahnen, z.B. Papier-, Faserstoff-, Textil-, Metall- oder Kunststoffbahnen.

### Stand der Technik

Der Walzenmantel ist bei der aus GB-A 2 143 302, Fig. 12 bekannten Druckwalze mittels hydraulischer Stützelemente gegen den Träger abgestützt, und in Stützrichtung relativ zum Träger frei beweglich, so dass er einer Gegenwalze zu folgen vermag und eine gleichmässige Linienkraft oder ein gewünschtes Druckprofil auf die zwischen der Druckwalze und der Gegenwalze durchlaufende Warenbahn ausübt, unbeeinflusst durch Bewegungen oder Durchbiegungen der Gegenwalze. Die Stützelemente laufen dabei auf der zylindrischen Mantelinnenfläche und besitzen eine entsprechende zylindrische Lagerfläche. Sie sind daher nicht zur Axiallagerung geeignet.

Um eine Verschiebung des Walzenmantels in Achsenrichtung gegenüber dem Träger und um ein seitliches Ausweichen des Walzenmantels beim Betrieb der Druckwalze in einer Walzvorrichtung zu verhindern, ist der Walzenmantel dieser Druckwalze an seinen Enden auf dem Träger mit hydrostatischen Lagern auf einer Führungsvorrichtung, welche gegenüber den Trägerenden mittels einer Radialführung in Stützrichtung beweglich geführt ist, drehbar gelagert.

Durch die an den Enden des Walzenmantels vorgesehenen Lager wird zwar der Walzenmantel in Achsenrichtung fixiert. Machteilig ist jedoch, dass zusätzlich eine aufwendige Radialführung notwendig ist, deren Dimensionen vom Walzendurchmesser abhängig sind, und die bei den im Betrieb auftretenden Querkräften eine störende Reibung verursacht.

Daher ist die Rotationsgeschwindigkeit des Walzenmantels begrenzt und bei hohen Drehzahlen der Walze wird eine hohe Leistungsaufnahme des Antriebes benötigt.

Weiter ist aus US-A-3 494 675 eine Durchbiegungseinstellwalze bekannt, bei der beide Enden des Walzenmantels mit hydraulisch geschmierten Halbkugelschalenlagen auf dem Träger gelagert sind. Solche Lager fixieren jedoch die Position der Walzenmantelenden gegenüber dem Träger in Radialrichtung und gestatten nicht die erforderliche radiale Beweglichkeit des Walzenmantels über seine gesamte Breite in der Stützrichtung. Ausserdem erlauben diese Halbkugelschalenlager keinen Längenausgleich, der durch unterschiedliche Wärmedehnungen des Walzenmantels und des Trägers sowie infolge einer Trägerdurchbiegung beim Betrieb der Druckwalze entstehen, so dass im Betrieb eine einwandfreie Lagerung nicht immer gewährleistet ist.

### Darstellung der Erfindung

Die Erfindung setzt sich die Aufgabe, die erwähnten Nachteile des Standes der Technik zu beseitigen und eine Druckwalze der eingangs bezeichnenden Art zu schaffen, bei welcher der Walzenmantel bei freier Beweglichkeit in Stützrichtung reibungsarm in Achsenrichtung fixiert ist, und zwar mit einfacherer Konstruktion, und zudem bei höheren zulässigen Temperaturen, bei grösseren Drehzahlen des Walzenmantels, unter Reduktion der Leistungsaufnahme des Walzenantriebes bei hohen Geschwindigkeiten und unter Gewährleistung eines Längenausgleichs zwischen Walzenmantel und Träger, sowie unter Verhinderung des seitlichen Ausbrechens des Walzenmantels betreibbar ist.

Erfindungsgemäss wird diese Aufgabe dadurch gelöst, dass die hydrostatischen Stützelemente mit sphärischer Lagerfläche als hydraulisch nachfahrende Stützelemente ausgebildet sind, welche mittels einer Kolben/Zylinder-Führung in einem mit Druckmittel versorgten Druckraum in Stützrichtung beweglich sind, und an ihrer Lagerfläche Drucktaschen aufweisen, die mit dem Druckraum über eine Drosselbohrung in Verbindung stehen.

Solche Stützelemente können an beiden Walzenmantelenden vorgesehen sein, jedoch ist eine Sicherung gegen axiale Verschiebungen auch mit nur einem Stützelement an einem Walzenende oder in Walzenmitte möglich, wobei auch bei grösserem Hub des Walzenmantels und bei grösseren Träger-Durchbiegungen eine einwandfreie Lagerung gewährleistet ist.

### Kurze Beschreibung der Zeichnungen

Die Erfindung wird anhand der in den figuren dargestellten Ausführungsbeispiele näher erläutert. Es zeigen :

Fig. 1 eine Druckwalze mit sphärischer Form der Lagerfläche des Stützelementes,

Fig. 2 eine ähnliche Ausführung mit einem Lagerring mit sphärischer Lauffläche.

Fig. 3 eine Druckwalze mit mittigem Stützelement

mit sphärischer Lagerfläche und

Fig. 4 a-c verschiedene Anordnungen von Lagertaschen.

## Wege zur Ausführung der Erfindung

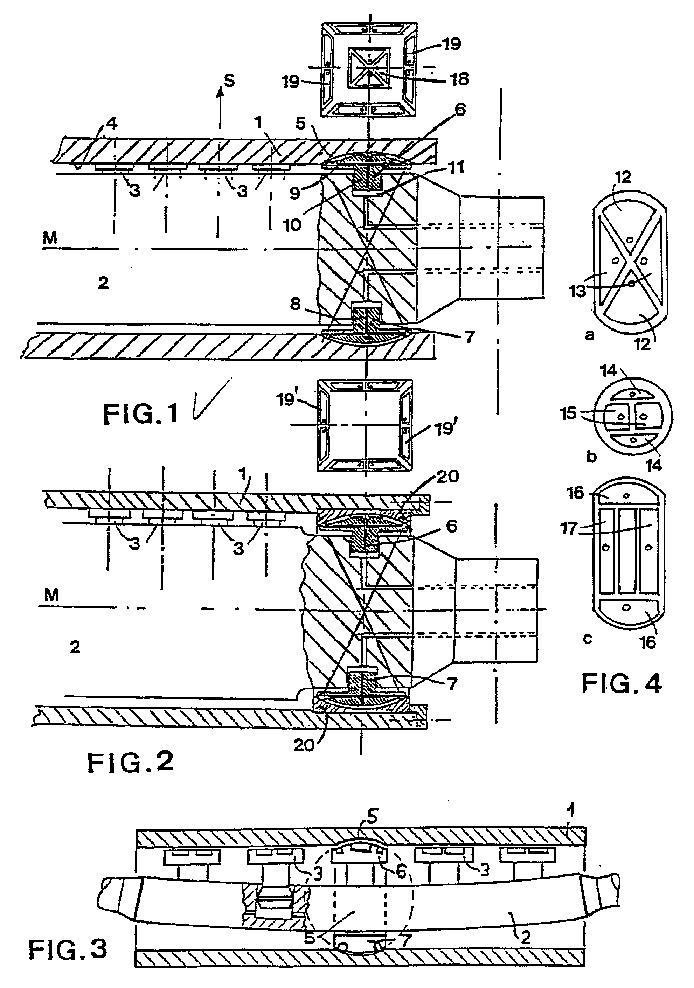

Bei der in Fig. 1 im Axialschnitt dargestellten Druckwalze ist ein Walzenmantel 1 um einen nichtrotierbaren Träger 2 rotierbar. Der Walzenmantel 1 ist dabei auf dem Träger in Stützrichtung S zu einer Gegenwalze mit einer Reihe von in Achsenrichtung nebeneinander angeordneten hydrostatischen Stützelementen 3 abgestützt, wie sie beispielsweise aus US-A-3 802 044 bekannt sind, oder auf andere Weise, beispielsweise mit anders aufgebauten Stützelementen, Stützleisten oder Druckkissen, so dass der Walzenmantel 1 gegenüber dem Träger 2 in Stützrichtung S beweglich ist und Bewegungen oder Durchbiegungen der Gegenwalze zu folgen vermag. Bei Ausübung einer Gegenkraft biegt sich der Träger 2 durch, wobei jedoch der Walzenmantel 1 zufolge der nachfahrenden hydrostatischen Stützelemente 3 den Bewegungen oder Durchbiegungen der Gegenwalze zu folgen vermag und eine gleichmässige Linienkraft oder ein gewünschtes Druckprofil einstellbar ist. Die Lagerflächen der Stützelemente 3 sind dabei als Ausschnitte eines Zylinders geformt, entsprechend der zylinderischen Lauffläche 4 an der Innenseite des Walzenmantels 1.

An seinen Enden weist der Walzenmantel 1 jedoch abweichend von der Zylinderform sphärische Laufflächen 5 in der Form eines durchgehenden Kugelringes auf. Analog dazu sind in zylindrischen Bohrungen 11 an den Enden des Trägers 2 hydrostatische Stützelemente 6 vorgesehen, deren sphärische Lagerflachen 9 mit den sphärischen Laufflächen 5 des Walzenmantels zusammenwirken.

Die äusseren hydrostatischen Stützelemente 6 bilden wegen ihrer sphärischen Lagerungen eine Führungsvorrichtung, welche den Walzenmantel 1 in axialer Richtung fixiert und in der vorgesehenen axialen Position festhält. Wegen der nachfahrenden Eigenschaften der Stützelemente 6 und auch der inneren Stützelemente 3 passen sich diese automatisch an den in Stützrichtung S über die ganze Breite frei beweglichen Walzenmantel 1 an.

Für den Betrieb der hydrostatischen Stützvorrichtungen ist kein Spezialöl als Schmiermittel erforderlich, sondern es können preiswerte Flüssigkeiten eingesetzt werden, gegebenenfalls auch Wasser. Wegen der Kühlwirkung des Druckmittels treten auch geringere Temperaturprobleme auf als bei Wälzlagern. Infolge des äusserst geringen Reibungswiderstandes hydrostatischer Lagerungen ist auch eine höhere Drehzahl und Betriebsgeschwindigkeit der Walze ermöglicht, und die Leistungsaufnahme des Antriebes ist auch bei hohen Geschwindigkeiten sehr gering.

Zur Zentrierung können auf der von der Gegenwalze abgewandten Seite der Druckwalze in Gegenrichtung wirkende Stützelemente 7 vorgesehen sein, deren Druck auf den Druck der oberen Stützelemente 6 abgestimmt ist. Je nach Gegebenheiten kann er kleiner, gleich oder grösser als dieser gewählt sein. Die äusseren Stützelemente 6 oder 7 können im übrigen gleich aufgebaut sein wie die inneren Stützelemente 3 oder aber auch andere Dimensionen oder eine abweichende Konstruktion aufweisen, bzw. mit einem anderen Druckmittel-Druck gespiesen werden.

Es wird bemerkt, dass es bei Verwendung einer sphärischen Lagerfläche im Prinzip ausreichend ist, nur an einem Ende des Walzenmantels eine solche Führungsvorrichtung mit sphärischen Stützelementen vorzusehen, so dass eine Expansion des Walzenmantels im Betrieb unter Temperatur- oder Druckeinfluss nicht störend wirkt. Jedoch können auch an beiden Enden solche Stützelemente mit sphärischer Lagerfläche vorgesehen sein, wobei zwecks Längenausgleich jedoch für eine hinreichende Neigbarkeit dieser Stützelemente in der Achsenebene gesorgt sein muss. Dabei können die Stützelemente auch etwas schräg gestellt sein, d.h. einen Winkel mit der Stützrichtung S bilden, wobei zufolge der sphärischen Ausbildung der Lagerflächen trotzdem eine einwandfreie Lagerung gewährleistet ist.

Zur Verhinderung eines Kippens oder Verkantens der sphärischen Lagerfläche des hydrostatischen Stützelementes 6 gegen die sphärische Laufffläche 5 des Walzenmantels 1 und somit zur Verhinderung des seitlichen Ausweichens des Walzenmantels 1 sind auf der Lagerfläche des Stützelementes 6 mehrere Lagertaschen vorgesehen, und zwar vier zentrale Lagertaschen 18 und in gewissem Abstand dazu acht periphere Lagertaschen 19. Die zentralen Lagertaschen dienen hierbei zur Erzeugung der Press- oder Stützkraft, während durch die peripheren Lagertaschen die Lagerfläche und damit der Walzenmantel automatisch stabilisiert und ein seitliches Ausweichen verhindert wird.

Auf der entgegengesetzten Seite zum Stützelement 6 kann ein Gegenstützelement 7 mit ebenfalls sphärischer Lagerfläche vorgesehen sein, welches analog aufgebaut sein kann, wie das Stützelement 6. Es kann jedoch auch zweckmässig sein, bei den Gegenstützelementen 7 auf deren Lagerfläche nur periphere Drucktaschen 19' vorzusehen, so dass sich die von den peripheren Lagertaschen 19 und 19' ausgeübten Kräfte gegeneinander aufheben und die resultierende Stützkraft nur von den zentralen Lagertaschen 18 erzeugt wird. Für die zentralen und die peripheren Lagertaschen genügt ein einziger Speisedruck des Druckmittels, welcher im übrigen gleich dem Speisedruck der Stutzvorrichtungen 3 gewählt sein kann.

Die Führungsvorrichtung der Walze nach Fig. 2 unterscheidet sich vom vorangehenden Beispiel nur dadurch, dass die sphärische Lauffläche im Inneren des Walzenmantels 1 an einem separaten, in den Mantel eingesetzten Laufring 20 vorgesehen ist. Eine Schwächung des Walzenmantels im Bereich der Führungsvorrichtung wird hierdurch vermieden, was insbesondere bei dünnen Walzenmänteln von Vorteil ist. Dieser Laufring 20 kann als Kugelring analog ausgeführt sein, wie der Aussenring eines Pendelrollenlagers, und ist einfach herzustellen. Ein schwieriges und teueres Anschleifen der Walzenmantel-Innenseite in einer genau zentrierten Kugelform ist hierbei nicht erforderlich. Ausserdem kann der Walzenmantel einfach gegen einen neuen Mantel ausgetauscht und ausgewechselt werden, indem lediglich der Laufring in den neuen Mantel eingesetzt wird.

Um Neigungen des Trägers 2 gegen den Walzenmantel 1 aufzufangen und gleichzeitig ein seitliches Ausweichen des Walzenmantels noch sicherer zu verhindern, ist es vorteilhaft, an einem Walzenende die oberen Stützelemente 6 mit möglichst geringer Neigbarkeit in allen Richtungen auszuführen, d.h. nur in Stützrichtung zu führen, jedoch die Gegenstützelemente 7 so auszubilden, dass sie in Axialrichtung, d.h. in der Stützebene, eine gewisse Neigbarkeit aufweisen, jedoch nicht in Querrichtung, d.h. in der Ebene senkrecht zur Walzenachse M, z.B. durch längliche oder schlitzförmige Ausbildung der Bohrung 11 und des entsprechenden Fusses 8 des Gegenstützelementes 7. Die Stützelemente und die Gegenstützelemente am anderen Walzenende sollten dann so ausgebildet sein, dass sie beide nur in Achsenrichtung neigbar sind, jedoch nicht in Querrichtung oder Umfangsrichtung. Damit wird erreicht, dass der Walzenmantel in Stützrichtung, d.h. radial beweglich geführt ist, in Achsenrichtung jedoch positioniert ist, wobei ein seitliches Ausweichen des Walzenmantels in Querrichtung verhindert wird.

Zufolge der Neigbarkeit der Stützelemente 6 und 7 wird trotzdem eine sichere und einwandfreie Lagerung an den sphärischen Lagerflächen 5 ohne Verkanten und Verklemmen der Stützelemente auch bei Trägerdurchbiegungen, d.h. einer lokalen Neigung des Trägers 2 gegen den Walzenmantel 1, oder bei einer Bewegung oder Längenänderung des Walzenmantels 1 erreicht.

Eine vergrösserte Neigbarkeit ist jedoch entbehrlich, wenn die Führungsvorrichtung, d.h. die sphärischen Stützelemente 6, 7 etwa in Walzenmitte vorgesehen sind, wo die Neigung des Trägers 2 gegen die Walzenmantelachse in der Regel Null ist, wie in Fig. 3 dargestellt.

Die Anordnung und Anzahl der Lagertaschen der Stützelemente mit sphärischer Lagerfläche kann auch abweichend von den vorstehend beschriebenen Beispielen gewählt werden. Fig. 4 zeigt drei verschiedene Möglichkeiten der Anordnung der Lagertaschen. Im Beispiel a) ist die Lagerfläche länglich ausgebildet und mit vier Lagertaschen versehen, wobei die in Umfangsrichtung orientierten Lagertaschen 12 einen weiter ab vom Zentrum gelegenen Schwerpunkt aufweisen als die axial orientierten Lagertaschen 13, so dass auch hier eine Stabilisierungswirkung in Umfangsrichtung auftritt. Das Gleiche gilt vom Beispiel b) bei einem kreisförmigen Stützelement mit asymmetrischer Aufteilung in periphere Lagertaschen 14 und axiale Lagertaschen 15. Im Beispiel c) sind bei einer länglichen Lagerfläche nur randständige Lagertaschen, und zwar periphere 16 und axiale 17 vorgesehen, während das Zentrum frei von Lagertaschen ist.

## Ansprüche

1. Druckwalze mit einem nicht-rotierbaren axialen Träger (2) und einem um den Träger (2) rotierbaren, gegen den Träger abgestützten, gegenüber dem Träger über seine gesamte Breite in einer Stützrichtung(S) beweglichen Walzenmantel (1), wobei wenigstens ein den Walzenmantel (1) abstützendes und axial fixierendes, hydrostatisches Stützelement (6, 7) mit sphärischer Lagerfläche (9), und ai Talzenmantel (1) eine entsprechende sphärische Lauffläche (5) mit gleicher Krümmung vorgesehen ist, dadurch gekennzeichnet, dass das hydrostatische Stützelement (6, 7) mit sphärischer Lauffläche als hydraulisch nachfahrendes Stützelement ausgebildet ist, welches mittels einer Kolben/Zylinder-Führung (10, 11) in einem mit Druckmittel versorgten Druckraum (11) in der Stützrichtung (S) beweglich ist, und an ihrer Lagerfläche (9) Drucktaschen (12-19) aufweist, die mit dem Druckraum (11) über eine Drosselbohrung in Verbindung stehen.

2. Druckwalze nach Anspruch 1, dadurch gekennzeichnet, dass nur an einem Ende des Walzenmantels (1) ein Stützelement (6) mit sphärischer Lagerfläche (9) vorgesehen ist.

3. Druckwalze nach Anspruch 1, dadurch gekennzeichnet, dass in der Mitte des Walzenmantels (1) ein Stützelement (6) mit sphärischer Lagerfläche (9) vorgesehen ist.

4. Druckwalze nach Anspruch 1, dadurch gekennzeichnet, dass an beiden Enden des Walzenmantels (1) Stützelemente (6) mit sphärischer Lagerfläche (9) vorgesehen sind, welche spiegelbildlich zueinander ausgebildet sind.

5. Druckwalze nach einem der Ansprüche 1-4, dadurch gekennzeichnet, dass sowohl ein Stützelement (6) mit sphärischer Lagerfläche auf der Seite der Stützrichtung (S) als auch ein Stützelement (7) mit sphärischer Lagerfläche auf der dazu entgegengesetzten Seite der Walze vorgesehen sind.

6. Druckwalze nach Anspruch 5, dadurch gekennzeichnet, dass das Stützelement (7) mit sphärischer Lagerfläche auf der der Stützrichtung (S) entgegengesetzten Seite der Walze in der Axialebene eine vergrösserte Neigbarkeit aufweist, als in der Ebene senkrecht zur Walzenachse (M).

7. Druckwalze nach einem der Ansprüche 1-6, dadurch gekennzeichnet, dass die hydrostatischen Stützelemente (6, 7) an ihrer sphärischen Lagerfläche (9) mehrere in verschiedenen Richtungen orientierte Drucktaschen (12-19) aufweisen, welche mit dem gleichen Druckmittel versorgt sind.

8. Druckwalze nach Anspruch 7, dadurch gekennzeichnet, dass die Stützelemente (6, 7) auf ihrer sphärischen Lagerfläche (9) sowohl zentrale Lagertaschen (18) als auch im Abstand zu den zentralen Lagertaschen zusätzlich periphere Lagertaschen (19) aufweisen.

9. Druckwalze nach Anspruch 7, dadurch gekennzeichnet, dass das Stützelement (6) mit sphärischer Lagerfläche auf der Seite der Stützrichtung (S) sowohl zentrale (18) als auch periphere (19) Lagertaschen, und das Stützelement (7) mit sphärischer Lagerfläche auf der dazu entgegengesetzten Seite nur periphere Lagertaschen (19') aufweist.

## Claims

1. A press roller with a non-rotatable axial carrier (2) and a roller shell (1) which is rotatable about the carrier (2), is supported against the carrier and is movable with respect to the carrier over its entire width in a supporting direction (S), with at least one hydrostatic supporting element (6, 7) with spherical bearing surface (9) being provided for supporting and axially fixing the roller shell (1), and a corresponding spherical running surface (5) having the same curvature being provided on the roller shell (1), characterised in that the hydrostatic supporting element (6, 7) with spherical running surface is designed as a hydraulically copying supporting element which is movable, by means of a piston/cylinder guide (10, 11), in the supporting direction (S) in a pressure chamber (11) supplied with pressure medium, and has on its bearing surface (9) pressure pockets (12-19) which are connected to the pressure chamber (11) via a choke bore.

2. A press roller according to Claim 1, characterised in that a supporting element (6) with spherical bearing surface (9) is provided only at one end of the roller shell (1).

3. A press roller according to Claim 1, characterised in that a supporting element (6) with spherical bearing surface (9) is provided in the middle of the roller shell (1).

4. A press roller according to Claim 1, characterised in that supporting elements (6) with spherical bearing surfaces (9) are provided at both ends of the roller shell (1), which elements are mirror-inverted with respect to each other.

5. A press roller according to one of Claims 1-4, characterised in that both a supporting element (6) with spherical bearing surface on the side of the supporting direction (S) and a supporting element (7) with spherical bearing surface on the opposing side of the roller are provided.

6. A press roller according to Claim 5, characterised in that the supporting element (7) with spherical bearing surface on the side of the roller opposite the supporting direction (S) has an increased inclinability in the axial plane than in the plane perpendicular to the roller axis (M).

7. A press roller according to one of Claims 1-6, characterised in that the hydrostatic supporting elements (6, 7) have on their spherical bearing surfaces (9) a plurality of pressure pockets (12-19) orientated in different directions, which pockets are supplied with the same pressure medium.

8. A press roller according to Claim 7, characterised in that the supporting elements (6, 7) have on their spherical bearing surfaces (9) both central bearing pockets (18) and also additionally peripheral bearing pockets (19) at a distance from the central bearing pockets.

9. A press roller according to Claim 7, characterised in that the supporting element (6) with spherical bearing surface has both central (18) and peripheral (19) bearing pockets on the side of the supporting direction (S), and the supporting element (7) with spherical bearing surface on the opposite side has only peripheral bearing pockets (19').

## Revendications

1. Cylindre de compression comportant un élément de support (2) axial non rotatif et une enveloppe (1) de cylindre rotative autour du support (2), appuyée contre l'élément de support, mobile par rapport à l'élément de support sur l'ensemble de sa largeur dans une direction d'appui (S), au moins un élément d'appui hydrostatique (6, 7) comportant une surface de portée sphérique (9), servant à fixer dans le sens axial l'enveloppe (1) de cylindre et à lui servir d'appui, étant prévu, ainsi qu'une surface de portée sphérique (5) correspondante de courbure identique située sur l'enveloppe (1) de cylindre, caractérisé par le fait que l'élément d'appui hydrostatique (6, 7) comportant une surface de portée sphérique, a une conformation d'élément d'appui à rattrapage hydraulique, lequel est mobile dans le sens d'appui (S) au moyen d'un guidage à piston et cylindre (10, 11) situé dans un espace de pression (11) alimenté en fluide sous pression, et présente des cavités de pression (12 à 19) sur sa surface (9) de portée, lesquelles sont en communication avec l'espace de pression (11) par l'intermédiaire d'un alésage d'étranglement.

2. Cylindre de compression selon la revendication 1, caractérisé par le fait que l'on prévoit un élément d'appui (6) comportant une surface de portée sphérique (9) à une seule extrémité de l'enveloppe (1) de cylindre.

3. Cylindre de compression selon la revendication 1, caractérisé par le fait que l'on prévoit un élément d'appui (6) comportant une surface de portée sphérique (9) au milieu de l'enveloppe (1) de cylindre.

4. Cylindre de compression selon la revendication 1, caractérisé par le fait que des éléments d'appui (6) comportant une surface de portée sphérique (9) sont prévues aux deux extrémités de l'enveloppe (1) de cylindre, lesquels ont une conformation inversée l'un par rapport à l'autre.

5. Cylindre de compression selon l'une des revendications 1 à 4, caractérisé par le fait que l'on prévoit un élément d'appui (6) comportant une surface de portée sphérique du côté situé dans la direction d'appui (S) ainsi qu'un élément d'appui (7) comportant une surface de portée sphérique du côté opposé du cylindre.

6. Cylindre de compression selon la revendication 5, caractérisé par le fait que l'élément d'appui (7) à surface de portée sphérique présente du côté du cylindre opposé à la direction d'appui (S) une latitude d'inclinaison supérieure dans le plan axial à celle qu'il présente dans le plan perpendiculaire à l'axe (11) du cylindre.

7. Cylindre de compression selon l'une des revendications 1 à 6, caractérisé par le fait que les éléments d'appui hydrostatique (6, 7) présentent dans leur surface de portée sphérique (9) plusieurs cavités de pression (12 à 19) orientées dans différentes directions, qui sont alimentées au moyen du même fluide de pression.

8. Cylindre de compression selon la revendication 7, caractérisé par le fait que les éléments d'appui (6, 7) présentent sur leur surface de portée sphérique (9), des cavitées de portée centrales (18) ainsi que des cavités de portée sphériques supplémentaires (19), situées à l'écart des cavités de portée centrales.

9. Cylindre de compression selon la revendication 7, caractérisé par le fait que l'élément d'appui (6) à surface de portée sphérique présente du côté de la direction d'appui (S) aussi bien des cavités de portée centrales (18) que des cavités de portée sphériques (19), et que l'élément d'appui (7) à surface de portée sphérique ne présente du côté opposé que des cavités de portée sphériques (19').

**FIG.1**

**FIG.2**

**FIG.3**

**FIG.4**